Europäisches Patentamt

European Patent Office

Office européen des brevets

(19)

(11) Veröffentlichungsnummer : **0 074 535**
**B1**

(12) # EUROPÄISCHE PATENTSCHRIFT

(45) Veröffentlichungstag der Patentschrift :
05.03.86

(51) Int. Cl.⁴ : **B 23 B 31/00**

(21) Anmeldenummer : 82107842.5

(22) Anmeldetag : 26.08.82

(54) **Verfahren zur Überwachung der Spannkraft an Spannvorrichtungen für Werkzeugmaschinen.**

(30) Priorität : 12.09.81 DE 3136285

(43) Veröffentlichungstag der Anmeldung :
23.03.83 Patentblatt 83/12

(45) Bekanntmachung des Hinweises auf die Patenterteilung : 05.03.86 Patentblatt 86/10

(84) Benannte Vertragsstaaten :
CH FR GB IT LI SE

(56) Entgegenhaltungen :
FR-A- 2 407 043
TRANSACTIONS A.S.M.E., Band 97, Nr. 3, August
1975, Seiten 931-938, New York, USA, M.P. GROO-
VER: "Monte Carlo simulation of the machining economics problem"
WERKSTATTSTECHNIK, Band 64, Nr. 9, September
1974, Seite 542, Springer Verlag, Berlin, DE., "Gerät
zum Überwachen der Werkzeugstandzeit"

(73) Patentinhaber : **Paul Forkardt GmbH & Co. KG**
**Rosenstrasse 44-46**
**D-4000 Düsseldorf 1 (DE)**

(72) Erfinder : **Steinberger, Josef**
**Sebastiansweg 30**
**D-4000 Düsseldorf 1 (DE)**
Erfinder : **Bongartz, Heinz Bertram, Dr.-Ing.**
**Am Rittersberg 6**
**D-4000 Düsseldorf 13 (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

EP 0 074 535 B1

## Beschreibung

Die Erfindung betrifft ein Verfahren zur Überwachung der Spannkraft an Spannvorrichtungen für Werkzeugmaschinen mittels aufeinanderfolgender Messungen der Spannkraft und Vergleich der Meßwerte mit einem vorgegebenen Grenzwert.

Um den Nutzungsgrad von Werkzeugmaschinen zu erhöhen, insbesondere die Fertigungsprozesse auch ohne ständig anwesende Bedienungspersonen in möglichst großem Umfang selbsttätig ablaufen zu lassen, sind neben Steuerungssystemen zur Durchführung einer automatischen Produktion automatische Zu- und Abführeinrichtungen zur selbsttätigen Beschickung der Werkzeugmaschinen sowie Prozeßüberwachungsgeräte bekannt, welche einen vorschriftsmäßigen Fertigungsablauf unter Berücksichtigung der Maschinen-, Werkzeug- und Werkstücksicherheit bewirken sollen.

Bei der Überwachung des Arbeitsablaufes von Werkzeugmaschinen, insbesondere bei der spanabhebenden Metallbearbeitung mittels Drehmaschinen, fehlt bisher eine Überwachung der Haltekräfte der Spannvorrichtung während des Bearbeitungsvorganges. Die Sicherheit des Spannvorganges von Spannvorrichtungen ist bis heute eine Schwachstelle an Werkzeugmaschinen, die insbesondere bei hohen Zerspanungsleistungen an Bedeutung gewinnt.

Hohe Zerspanungsleistungen bedingen hohe Spannkraft der Spannvorrichtung, welche nur mit gut geschmierten Spannvorrichtungen erreicht werden kann. Zur Sicherheit des Bearbeitungsvorganges muß somit der Betriebszustand der Spannvorrichtung ständig überwacht werden, weil physikalische, tribologische und chemische Einflüsse zu einem schnellen Nachlassen der Spannkräfte der Spannvorrichtung führen können. In der Praxis wird dieses Problem weitgehend unterschätzt, weil das Abfallen der Spannkraft während des Bearbeitungsvorganges bisher nicht erkannt wurde. Dieses Problem hatte bei den früher üblichen Zerspanungsbedingungen mit niedrigeren Zerspanungsleistungen auch eine geringere Bedeutung ; seitdem jedoch mit weiterentwickelten, numerisch-gesteuerten Werkzeugmaschinen und unter Einsatz moderner Schneidstoffe mit hoher Leistung zerspant wird, hat sich das Sicherheitsrisiko durch ungenügend große Spannkräfte der Spannvorrichtungen an Werkzeugmaschinen überproportional vergrößert, ohne daß dies bisher in ausreichendem Maße erkannt worden ist.

Es gibt Geräte zur Messung der Spannkraft an Spannvorrichtungen für Werkzeugmaschinen, siehe z. B. FR-A-2 407 043. Die Durchführung dieser Messungen ist in das Belieben der Bedienungsperson gestellt. Weil infolge der Ausbildung der bekannten Meßgeräte in der Regel ein Umsetzen der Spannbacken für die Durchführung einer Messung erforderlich ist, werden die Messungen nur unregelmäßig vorgenommen. Der an sich notwendige Vergleich der jeweiligen Meßwerte (Istwerte) mit einem vorgegebenen Grenzwert (Sollwert), mit dem das Unterschreiten der für einen sicheren Bearbeitungsvorgang notwendigen Haltekraft verhindert werden soll, geschieht somit weder mit der notwendigen Regelmäßigkeit noch zwangsläufig. Da der Einsatz der bekannten Geräte und der Zeitpunkt für die Ist-Sollwert-Vergleiche dem Bedienungspersonal der Werkzeugmaschinen überlassen sind, ist nicht sichergestellt, daß der Bearbeitungsvorgang nur unter den vorgegebenen Bedingungen durchgeführt wird. Das im Unterschreiten der erforderlichen Spannkraft liegende Risiko kann auf diese Weise nicht ausgeschaltet werden.

Der Erfindung liegt die Aufgabe zugrunde, ein Verfahren zu schaffen, das während der Bearbeitungsvorgänge die Haltekräfte der Spannvorrichtung an Werkzeugmaschinen zwangsläufig überwacht und dafür sorgt, daß der Bearbeitungsvorgang nur bei Sicherstellung der erforderlichen Haltekraft vorgenommen werden kann. Da die Haltekraft aller bekannten Spannvorrichtungen mit der Zahl der Spannvorgänge sinkt, weil sich die Gleitverhältnisse an den hochbelasteten Übertragungsflächen der zur Übertragung der Spannkraft eingesetzten Getriebe zwischen den Schmiervorgängen verschlechtern, dient die Erfindung insbesondere zur Aufrechterhaltung der notwendigen Spannkraft durch rechtzeitige und ordnungsgemäße Schmierung der Spannvorrichtung.

Die Lösung dieser Aufgabenstellung durch die Erfindung ist dadurch gekennzeichnet, daß in einem wählbaren Meßzyklus zwischen aufeinanderfolgenden Spannvorgängen die momentane Spannkraft der Spannvorrichtung gemessen und aus den Meßwerten die Tendenz des Spannkraftverlaufes über der Anzahl der Spannvorgänge ermittelt wird und daß nach dem letzten Meßvorgang von dem zu erwartenden Unterschreiten des Grenzwertes ein Signal zur Unterbrechung des Bearbeitungsprozesses abgegeben wird.

Mit diesem erfindungsgemäßen Verfahren wird unabhängig von der Bedienungsperson die Einhaltung der Grenzwerte für die Spannsicherheit dadurch gewährleistet, daß nach einem vorgegebenen Meßzyklus die Spannkraft der Spannvorrichtung kontinuierlich überwacht wird. Da auf diese Weise die Überwachung der Haltekräfte des Werkstückes während der Bearbeitung an automatische Abläufe gebunden wird, so daß Routinevorgänge wegfallen und der Bedienungsperson die Entscheidung über die Durchführung der Spannkraftmessung entzogen wird, wird die bisher in der Überwachungskette vorhandene Schwachstelle, nämlich die Sicherheit des Spannvorganges entscheidend erhöht. Die in den Bearbeitungsprozeß eingegliederte Spannkraft-Überwachung und die durch das erfindungsgemäße Verfahren garantierte Einhaltung des vorgegebenen Grenzwertes für die Spannkraft ermöglichen es schließlich, daß die bisher üblichen Sicherheitsfaktoren hinsichtlich des Spannvorganges verringert werden können, wodurch höhere Zerspanungsleistungen bei gleichzeitig gesteigerter Produktqualität erreicht werden können, und zwar bei gleichzeitig verringertem Energieaufwand.

Das gemäß dem Verfahren der Erfindung rechtzeitig vor Unterschreiten des Grenzwertes für die Spannkraft abgegebene Signal zur Unterbrechung des Bearbeitungsprozesses kann ein akustisches oder optisches Signal sein, welches die Bedienungsperson veranlaßt, den Bearbeitungsprozeß zu unterbrechen und die notwendigen Maßnahmen zur Erhöhung der Spannkraft zu treffen, insbesondere die Spannvorrichtung abzuschmieren. Bei einer erfindungsgemäßen Weiterbildung des Verfahrens wird das Signal dazu verwendet, die Wiederaufnahme des Bearbeitungsvorganges durch Abschalten der Werkzeugmaschine zu verhindern. Hierdurch wird das erfindungsgemäße Verfahren in die Steuerung der Werkzeugmaschine integriert, so daß ein Unterschreiten der erforderlichen Spannkraft über die Werkzeugmaschinensteuerung her automatisch verhindert wird.

Das erfindungsgemäße Verfahren sichert mit einer von einem Mikroprozessor gesteuerten Überwachungslogik prozeßbegleitend die Einhaltung optimierter Verhältnisse an der Spannvorrichtung. Die vorgegebenen Daten, wie beispielsweise die Spannkraft, werden mit den aktuellen Meßwerten verglichen und eine Prognose über die weitere Spannsicherheit erstellt, wobei eine Diagnose dem Bedienungspersonal Auskunft über die zu ergreifenden Maßnahmen gibt.

Das erfindungsgemäße Verfahren berücksichtigt die in der Praxis vorliegenden Gegebenheiten bei der Bearbeitung von Werkstücken in Spannvorrichtungen, wobei die Vorrichtung zur Durchführung des Verfahrens in der Lage ist, die Sollwerte zu speichern, die Istwerte festzustellen und innerhalb der vorgeschriebenen Grenzen den Spannvorgang mit den sich daraus ergebenden Rückschlüssen zu überwachen.

Bei der praktischen Anwendung des Verfahrens wird die aus den Zerspanungsdaten ermittelte und für die Durchführung des Spannvorganges erforderliche Spannkraft in Form eines Grenzwertes in ein Gerät eingegeben und gespeichert. Auch das Prüfintervall, d. h. die Anzahl der Spannungen, nach denen geprüft werden soll, wird in das Gerät eingegeben und gespeichert.

Da zur Durchführung des erfindungsgemäßen Verfahrens das Gerät integrierend die Summe der Spannkraft, die für die Übertragung der Zerspanungskräfte entscheidend ist, überwacht, muß auch die Zahl der Spannelemente der verwendeten Spannvorrichtung, beispielsweise die Backenzahl des zum Einsatz kommenden Backenfutters, eingegeben werden. Diese Dateneingabe wird nur von einer dazu autorisierten Person, wie beispielsweise einem Einrichter, durchgeführt. Dieser stellt das Gerät vom Eingabebetrieb in den Überwachungsbetrieb um und sichert dadurch die eingegebenen Daten.

Der Mikroprozessor des verwendeten Gerätes gibt nun die Anweisung der Messung der Spannkraft beim ersten Spannvorgang, stellt die momentane Spannkraft fest, bringt diese zur Anzeige und speichert sie. Weiterhin veranlaßt der Mikroprozessor den Vergleich von Grenzwerten und momentan vorliegender Spannkraft und gibt bei einem Istwert, der größer als der Grenzwert ist, den Bearbeitungsprozeß frei.

Sollte der Meßwert kleiner als der Sollwert sein, wird der Start für den Bearbeitungsvorgang über ein Ausgangssignal bei an der Maschine angekoppeltem Gerät direkt und/oder indirekt durch Hinweise von Signalen, wie beispielsweise dem Aufleuchten einer Lampe, verhindert. Zusätzlich kann das Gerät den Hinweis auf die Ursache des verhinderten Prozeßbeginns geben.

Beginnend mit dem Übergang in den Überwachungsbetrieb werden die Spannvorgänge gezählt, abgespeichert und bei Erreichen der Vorgabe erneut zum Messen aufgefordert.

Ist der Meßwert größer als der Grenzwert, erfolgt eine erneute Freigabe der Werkzeugmaschine. Entsprechend dem vorgegebenen Meßzyklus werden die Meßwerte fortlaufend gespeichert. Unter Berücksichtigung dieser abgespeicherten Meßwerte und der Prüfintervalle wird vom Mikroprozessor der Vorrichtung eine Prognose erstellt, welche voraussagt, ob innerhalb des folgenden Prüfintervalles, der eine bestimmte Anzahl von Spannvorgängen beinhaltet, eine Unterschreitung des Grenzwertes zu erwarten ist.

Sollte dies der Fall sein, so wird der Bedienungsperson die Anzahl der noch möglichen Spannvorgänge bis zum Erreichen des Grenzwertes angezeigt und/oder ein Neubeginn der Bearbeitung verhindert, beispielsweise durch Blockieren des Anlaufs der Werkzeugmaschinenspindel.

Die Vorrichtung zur Durchführung des Verfahrens ist auch in der Lage, den Spannvorgang und/oder Meßvorgang zu identifizieren, um zu gewährleisten, daß die vom System bearbeiteten Meßdaten auch tatsächlich den Istdaten der Spannvorrichtung entsprechen. Eine Manipulation wird damit weitgehend ausgeschlossen.

Durch diese der Erfindung zugrundeliegende Konzeption des Überwachungssystems für Spannvorrichtungen ist gewährleistet, daß die für den Zerspanungsprozeß notwendige Spannkraft der Spannvorrichtung nicht unbeabsichtigt unterschritten werden kann. Auf diese Weise werden Unfälle und Schäden an der Werkzeugmaschine verhindert.

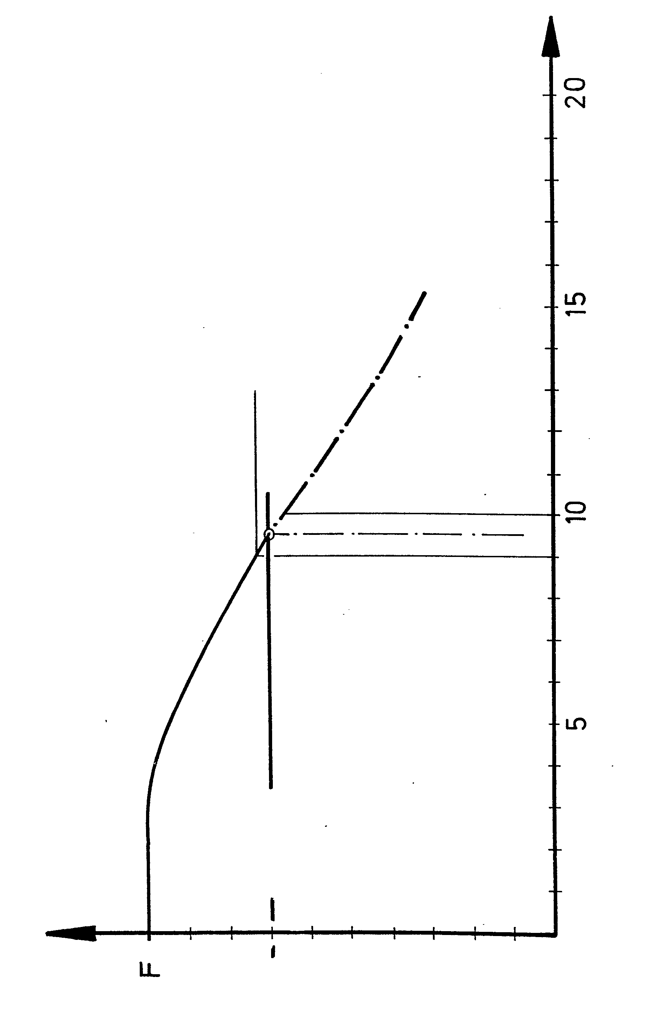

Auf der Zeichnung ist ein Diagramm zur Verdeutlichung des erfindungsgemäßen Verfahrens dargestellt.

Das Diagramm zeigt den Verlauf der Spannkraft F über der Zeit, welche durch die Anzahl der Messungen bzw. die Anzahl der Spannvorgänge repräsentiert. Zwischen den einzelnen Messungen liegt eine bestimmte Anzahl von Spannvorgängen, die je nach Art der Bearbeitung und des Werkstückes wählbar ist.

Nach einem anfänglich nahezu gleichbleibenden Verlauf der Spannkraft über der Anzahl der Messungen fällt die Spannkraft zunehmend ab. Dies resultiert aus der zunehmenden Reibung im Getriebe der Spannvorrichtung, welches die Spannkraft von einem Krafterzeuger auf die Spannelemente überträgt. In diesem Getriebe treten bei der Übertragung hohe Flächenbelastungen auf. Diese Kraftübertragungsflächen werden mit Fett geschmiert. Das Fett wird infolge der hohen Belastung zunehmend weggequetscht, wodurch die Reibung ansteigt und der Wirkungsgrad des Getriebes sinkt. Insgesamt führt dies zu einer Verringerung der mit der Spannvorrichtung erzielbaren Spannkraft, wie dies aus dem Diagramm hervorgeht.

Die von einer Spannkraft-Meßvorrichtung gemessene Spannkraft wird einem Mikroprozessor aufgegeben, der bereits nach Vorliegen einiger Meßwerte eine Tendenz des Spannkraftverlaufes ermittelt. Diese Tendenz ist in dem Diagramm mit strichpunktierten Linien dargestellt.

Aus dieser Tendenz wird erkennbar, daß beim Ausführungsbeispiel gemäß der Zeichnung nach der neunten Messung der Grenzwert unterschritten werden wird. Hierdurch würde die notwendige Haltekraft nicht mehr aufgebracht ; das Werkstück könnte sich von der Spannvorrichtung lösen.

Dieses Lösen wird dadurch verhindert, daß bereits vor der zehnten Messung die Werkzeugmaschine stillgesetzt wird, und zwar entweder aufgrund eines optischen oder akustischen Signals durch die Bedienungsperson oder automatisch durch ein Signal, welches über die Werkzeugmaschinensteuerung deren Antrieb stillsetzt. Auf diese Weise wird durch unmittelbares Messen und das voranstehend beschriebene Verfahren sichergestellt, daß die bisherige Schwachstelle an Werkzeugmaschinen, nämlich die Sicherheit des Spannvorganges von Spannvorrichtungen, beseitigt und gewährleistet wird, daß die Spannvorrichtungen ausschließlich zum Einsatz kommen, wenn deren Haltekraft ausreichend groß ist, um im jeweiligen Bearbeitungsfall das Werkstück sicher festzuhalten.

## Patentansprüche

1. Verfahren zur Überwachung der Spannkraft an Spannvorrichtungen für Werkzeugmaschinen mittels aufeinanderfolgender Messungen der Spannkraft und Vergleich der Meßwerte mit einem vorgegebenen Grenzwert, dadurch gekennzeichnet, daß in einem wählbaren Meßzyklus zwischen aufeinanderfolgenden Spannvorgängen innerhalb des Bearbeitungsprozesses einer Werkstückserie die momentane Spannkraft der Spannvorrichtung gemessen und aus den Meßwerten die Tendenz des Spannkraftverlaufes über der Anzahl der Spannvorgänge ermittelt wird und daß nach dem letzten Meßvorgang vor dem zu erwartenden Unterschreiten des Grenzwertes ein Signal zur Unterbrechung des Bearbeitungsprozesses abgegeben wird.

2. Verfahren nach Anspruch 1, dadurch gekennzeichnet, daß durch das Signal die Wiederaufnahme des Bearbeitungsprozesses durch Abschalten der Werkzeugmaschine selbsttätig verhindert wird.

## Claims

1. A method of monitoring the clamping force of clamping devices of machine tools by means of successive measurements of the clamping force and comparison of the measured values with a predetermined limit value, characterised in that, in a selectable measuring cycle between successive clamping events within the machining process of a series of workpieces, the instantaneous clamping force of the clamping device is measured, and from the measured values the tendency of the clamping force variation over the number of clamping events is ascertained, and in that, after the last measuring event before the expected fall below the limit value, a signal to interrupt the machining process is emitted.

2. A method according to claim 1, characterised in that by means of the signal the resumption of the machining process is prevented automatically by the switching off of the machine tool.

## Revendications

1. Dispositif pour la surveillance de la force de serrage sur des dispositifs de serrage destinés à des machines outils au moyen de mesures successives de la force de serrage et de la comparaison des valeurs de mesure avec une valeur limite prédéterminée caractérisé en ce que, pendant un cycle de mesure pouvant être choisi, entre des processus de serrage successifs à l'intérieur du procédé d'usinage d'une série de pièces, on mesure la force de serrage momentanée du dispositif de serrage et on détermine à partir des valeurs de mesure la tendance de l'allure de la force de serrage pour le nombre des processus de serrage et en ce que après le dernier processus de mesure avant le dépassement attendu de la valeur limite par valeur décroissante, on délivre un signal pour l'interrupteur du processus d'usinage.

2. Procédé selon la revendication 1, caractérisé en ce que grâce au signal, on empêche la reprise du processus du signal de manière automatique par déconnexion de la machine outil.

1